# EUROPEAN PATENT APPLICATION

(11) **EP 1 610 159 A1**
(43) Date of publication of application: **28.12.2005**
(21) Application number: 04724866.1
(22) Date of filing: 31.03.2004
(51) Int. Cl.: G02B 6/12

(54) **SILICON SUBSTRATE AND METHOD OF FORMING THE SAME**

(30) Priority: 31.03.2003 JP 2003093209
(71) Applicant: HAMAMATSU PHOTONICS K. K., Hamamatsu-shi, Shizuoka 435-8558 (JP); Nagata, Seiichi, Souraku-gun, Kyoto 6190237 (JP)
(72) Inventor: NAGATA, Seiichi, Shizuoka 434-0042 (JP)
(74) Representative: Frost, Alex John
(86) International application number: PCT/JP2004/004711
(87) International publication number: WO 2004/088375

(57) **Abstract**

A silicon substrate 1 has a structure in which a depression of a silicon crystal is formed on at least one principal surface 2 side of a crystalline silicon substrate and which has a vitreous region 3 filled in the depression and consisting primarily of silicon oxide. The vitreous region 3 is formed so that the glass transition temperature Tg thereof is lower than that of pure silica glass and not more than 900°C. This configuration realizes the silicon substrate in which internal strain is reduced between glass and the silicon crystal, and a forming method thereof.

## Description

### Technical Field

The present invention relates to a silicon substrate and a forming method thereof and, more particularly, to a silicon substrate in which a depression of a silicon crystal is formed on at least one principal surface of the silicon substrate and in which the depression is filled with a vitreous material, and a method of forming a silicon substrate, comprising forming a mask layer on the silicon substrate; anodizing the silicon substrate with the mask layer removed in part, in a hydrofluoric acid solution, or placing the silicon substrate in a gas phase containing fluorine, thereby selectively forming a porous silicon (PS) region around the removed part of the mask layer; partially or completely oxidizing a silicon fine column inside this PS region to form a porous region containing silica; doping the porous region containing silica, with an impurity element; and performing a thermal treatment to form the silicon substrate wherein the PS-existing region is filled with a dense vitreous material consisting primarily of silicon oxide and containing an oxide of the impurity element.

### Background Art

There are technologies of forming a plurality of porous silicon (PS) regions with different pore sizes, selectively doping the PS portions of large pore sizes with an impurity, and oxidizing them into silicon oxide, thereby forming an optical waveguide or the like. Such technologies are disclosed in Japanese Patent Application Laid-Open No. H10-133047, No. H11-14848, No. H11-242125, and No. 2000-47045 which are documents of conventional technologies by the Inventors of the present application. However, these documents describe nothing about the effect of decreasing the glass transition temperature of silica glass, the effect of increasing the expansion coefficient of glass, etc. by doping with impurities.

According to technical books of glass, glass components are roughly classified into Network Formers (NWFs) and Network Modifiers (NWMs). The NWFs are oxides such as SiO₂, GeO₂, P₂O₅, and B₂O₃. The NWMs are oxides of Group 1a alkali metals such as Li₂O, Na₂O, K₂O, Rb₂O, and Cs₂O, oxides of Group 2a alkaline earth metals such as MgO, CaO, SrO, and BaO, and so on.

It is known that the properties of silica glass largely vary with addition of a relatively small amount of NWM into silica glass consisting primarily of SiO₂. Particularly, decrease in the glass transition temperature (Tg) and increase in the thermal expansion coefficient (α) are known as the variation in the properties of silica glass. It is also known that the decrease in the glass transition temperature Tg and the increase in the thermal expansion coefficient α occur similarly with addition of GeO₂, P₂O₅, or B₂O₃ as NWF into the silica glass consisting primarily of SiO₂. However, the effect of NWM is much greater than that of NWF, in comparison in terms of molar ratios of additives relative to SiO₂.

In the 1.5 µm band which is the minimum transmission loss wavelength region of silica optical fibers consisting primarily of silicon oxide, approximately 75% of the transmission loss is caused by density fluctuations frozen at the high glass transition temperature Tg of silica glass. For a purpose of reducing the transmission loss through decrease of Tg in order to reduce such density fluctuations, the paper by M. E. Lines (1) J. Non-Crystalline Solids, Vol. 171, pp209-218 (1994) describes the detailed study on doping of silica glass with alkali metal. In addition, the same author reports a similar study on codoping with alkali metal and fluorine in (2) J. Non-Crystalline Solids, Vol. 171, pp219-227 (1994).

Furthermore, K. Saito et al., the paper (3) J. Appl. Phys., Vol. 81, pp7129-7134 (1997), describes the study on the variation in optical characteristics by a thermal treatment of pure silica glass ion-implanted with Na⁺ being one of alkali metals. This paper discloses that the thermal treatment at 600°C for 24 hours and at 680°C for 24 hours subsequent thereto, on the sample implanted with Na⁺ only 10-50 ppm decreases scattering due to density fluctuations of silica glass, as compared with the silica glass matrix, and this scattering decrease ranges throughout the entire silica substrate 1 mm thick. In this manner, the glass transition temperature Tg of silica glass can be largely decreased by addition of a very small amount of an alkali metal element.

### Disclosure of the Invention

Each of the papers cited above details the decrease of Tg by addition of alkaline metal impurities and the effect of decreasing the minimum transmission loss of optical fiber by the decrease of Tg. However, they describe nothing about the variation in the expansion coefficient of silica glass with addition of impurities and the effect thereof. In addition, they highlight the effect of largely decreasing Tg by addition of a small amount of an alkali metal oxide or an alkaline earth oxide in silica glass, and also point out that there is no precedent for addition of a small amount of not more than about several % of these impurities.

On the other hand, there are a lot of papers describing the effect of addition of fluorine in porous silica to become a cladding, for preparing a silica optical fiber in which the core part is made of pure silica glass and in which the refractive index of the cladding is decreased. Typical papers include Hanawa et al. (3) IEICE Transactions Vol. J68-C, pp597-604 (1985) and (4) IEICE Transactions Vol. J71-C, pp212-220 (1988), M. Kyoto et al. (5) J. Mater. Sci, Vol. 28, pp2738-2744 (1993), and so on. These papers detail the index decrease effect and viscosity decrease effect of silica glass by addition of fluoride, but do not describe the relationship of the fluorine addition with the expansion coefficient α, and others.

For example, P. K. Bachmann et al., the paper: J. Materials Sci., Vol. 23, pp2584-2588 (1988) about the properties of silica glass for optical fiber, reports that the expansion coefficient α of silica glass doped with fluorine is rather smaller than that of pure silica glass from room temperature to a certain temperature and that α rapidly increases in the range of not less than the certain temperature. It also reports that α increases in the case of codoping with GeO₂ and fluorine.

For using a thin film of a borophosphate silicate glass as a passivation film for VLSI, K. Kobayashi details the properties thereof in Glass Technology, Nol. 29, No. 6, pp253-257 (1988). It points out that multicomponent glasses melt at lower temperatures than pure silica glass and have larger thermal expansion coefficients and that it is, therefore, easy to match the expansion coefficients between glass and silicon, which enables achievement of low-strain or strain-free structure in VLSI preparation steps. It also reports that doping of the borophosphate silicate glass with fluorine further decreases the melting temperature. However, the contention of this paper concerns the properties as the passivation thin film for VLSI. The concept of the thin film does not concern the subject of filling a depression of a silicon crystal with a very thick, bulky glass region, which is the principal subject of the present invention.

Tanaka et al. reports the following research result in Yogyo-Kyokai-Shi Vol. 94, No. 6, pp564-570 (1986). First, a multicomponent borosilicate glass is thermally treated to effect phase separation, and thereafter the borate component is selectively removed by a sulfuric acid treatment, thereby forming a porous glass consisting primarily of silica. Then this porous glass is impregnated with sodium nitrate (NaNO₃) by use of an aqueous solution, and is baked to prepare a nonporous glass, the properties of which are described in the report. It is discussed that a low-concentration Na₂O impurity has the effect of largely decreasing the heat shrinkage temperature to densify the porous glass and the glass transition temperature Tg of glass after densification. The standpoint of this paper concerns the characteristics of the glass itself, and there is nothing described about the glass-silicon complex system as handled in the present invention.

All the documents about glasses cited above discuss the characteristics of single glasses or the characteristics between glasses in the case of complex glasses. They do not discuss the subject about the novel complex structure in which a depression of a silicon substrate is filled with a glass having the large sectional area of several ten µm × several ten µm in a normal use state as handled in the present invention.

The structure as described above has to be handled as a new subject of a complex system in which different substances with thermal characteristics largely different from each other, e.g., glass to silicon, are bonded to each other. Namely, it is necessary to solve various problems due to the temperature difference between a relatively high temperature for thermal shrinkage and densification of porous glass and the ordinary temperature for use of the silicon substrate and due to the difference of volume variation based on the difference between the expansion coefficients of silicon and glass.

Glass has the viscosity enough to flow and becomes easily deformed over the glass transition temperature (which will be denoted by Tg and which is normally defined as a temperature at which the viscosity η of glass reaches 10¹³ poise (P)). However, glass substantially loses flowability at temperatures below Tg and becomes not deformed. If a silica glass consisting of silicon oxide is formed uniformly thick (over several µm) on a silicon substrate and if it is treated at a temperature not less than the temperature of the glass transition point Tg so as to be kept in a thermal equilibrium state and is then cooled down to the ordinary temperature, the silicon substrate will have a large curvature.

The silica glass formed by oxidation of silicon has high Tg of 1177°C and very small values of the linear expansion coefficient of approximately 5-6 x 10⁻⁷ at temperatures below Tg. On the other hand, the silicon crystal demonstrates the linear expansion coefficient of about 40 × 10⁻⁷ in the temperature range from the above Tg to room temperature. The difference between their expansion coefficients is about one order of magnitude and the temperature width between Tg and room temperature is as large as about 1150°C; therefore, the difference of cumulative volume change is very large by virtue of the expansion coefficient difference and the temperature width. In fact, the temperature is decreased from the aforementioned Tg to room temperature, and thus the foregoing volume change appears as a difference of volumetric shrinkage. The volumetric shrinkage of silicon is greater than that of silica glass, and thus this difference of volumetric shrinkage imparts large compressive stress on the silica glass and tensile stress on silicon. This results in causing large strain between them. This large strain adversely affects many devices in which thick silica glass is formed on the silicon substrate.

The film of silicon oxide (silica glass) used as an insulating film in ordinary silicon devices is a thin film sub-µm thick, whereas the present invention is directed to thick bulky silica glass, for example, having the thickness of not less than 1 µm x 1 µm in its cross section. Particularly, where the silica glass region is prepared for the purpose of application to an optical waveguide or the like, a region with a large sectional area of several ten µm x several ten µm (at least about 5 µm × 5 µm or more) is needed.

In the case of the present invention in which the very thick, bulky region of silica glass is formed in a buried state in a depression of a silicon substrate, as a concept of the thin film, strong stress locally acts between the silica glass and the silicon substrate by virtue of the aforementioned difference of cumulative volume change and the silicon substrate can be elevated in the vicinity of the interface between silica glass and silicon. This locally acting stress is not preferable in terms of stability of devices having the above structure. Where this buried silica glass is used, for example, as an optical waveguide, the stress acting on the silica glass can be a factor to degrade the optical characteristics such as polarization conservation of light propagating in the waveguide.

An object of the present invention is to obtain a silicon substrate in which internal strain is reduced between glass and silicon crystal, and to establish a method of forming the silicon substrate.

In order to achieve the above object, a silicon substrate according to the present invention is a silicon substrate wherein a depression of a silicon crystal is formed on at least one principal surface side of a crystalline silicon substrate, the silicon substrate having a vitreous region filled in the depression and comprising silicon oxide as a principal component, wherein a glass transition temperature Tg of the vitreous region is lower than a glass transition temperature of pure silica glass and not more than 900°C.

In this silicon substrate, preferably, an expansion coefficient α of the vitreous region is greater than a thermal expansion coefficient of pure silica glass.

In the silicon substrate, preferably, the maximum expansion coefficient α of the vitreous region is not more than twice an expansion coefficient of the silicon crystal. The reason for it is as follows; if the expansion coefficient α of the vitreous region is too much greater than the expansion coefficient of the silicon crystal, the volumetric decrease of the glass becomes larger than that of silicon where the temperature is kept in a thermal equilibrium at the glass transition temperature Tg and thereafter is decreased to room temperature; this will result in exerting tensile stress on the glass and, in turn, causing cracks or crazes in the glass and defects such as peeling. The "twice" means that, supposing Tg is 600°C, the difference is at a level of shrinkage of glass 2 µm per mm in length of glass larger.

Preferably, the vitreous region contains at least one or more out of elements in a group consisting of Group 1a (Li, Na, K, Rb, Ce), Group 2a (Be, Mg, Ca, Sr, Ba), Group 3b (B, Al), Group 5b (P), and Group 7b (F, Cl) in the long-form periodic table.

Preferably, the depression of the silicon crystal is formed long in a first direction of the principal surface and relatively short in a second direction, and the vitreous region has a sectional area of not less than 1 µm × 1 µm in a cross section including the second direction and being perpendicular to the principal surface. This is because the present invention handles the vitreous region which is not the thin film covering the surface of the depression of the silicon substrate, but the thick bulky glass region buried in the depression of the silicon substrate.

A forming method of a silicon substrate according to the present invention is a method of forming a silicon substrate, comprising: a step of forming a mask layer on a front face of at least one principal surface of a crystalline silicon substrate; a step of removing a part of the mask layer; a step of selectively forming a porous silicon region in the crystalline silicon substrate by anodization in a hydrofluoric acid solution, or through the mask layer in an atmosphere containing hydrofluoric acid; a step of partially or completely oxidizing a silicon fine column inside the porous silicon region to change into a porous region containing silica; a step of doping the porous region containing silica, with an impurity element; a step of oxidizing and densifying the porous region containing silica; and a step of effecting a temperature decrease according to a predetermined program.

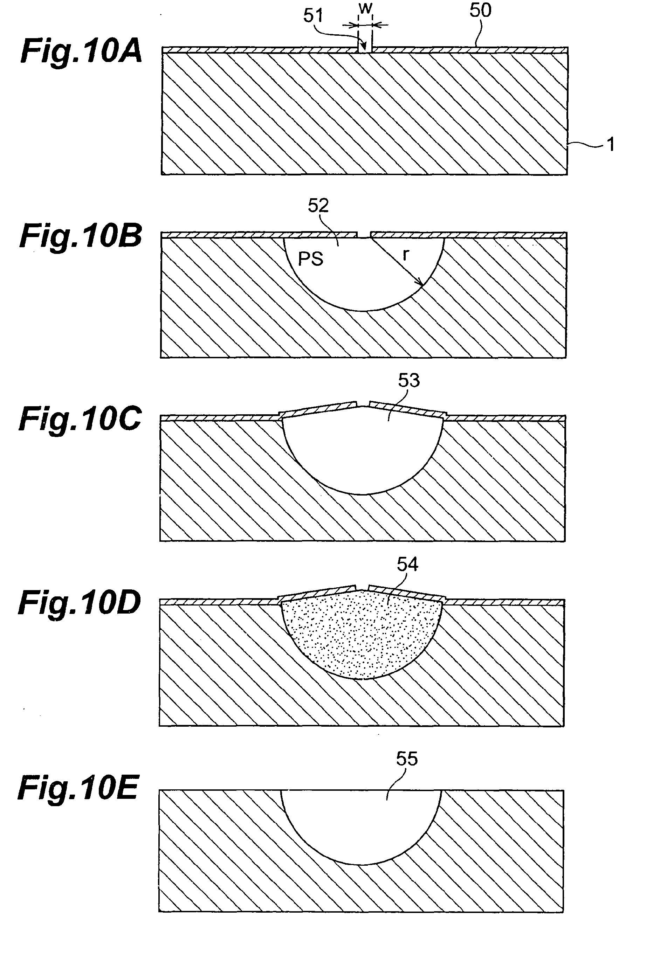

In the silicon substrate forming method, preferably, the mask layer is formed using at least one selected from a group consisting of amorphous silicon nitride, amorphous silicon carbide, amorphous carbon, and n-type silicon. These mask materials are useful for the selective formation of the porous silicon (PS) region in the silicon substrate as shown in Figs. 10A-10E described later.

Preferably, the impurity element is at least one or more out of elements in a group consisting of Group 1a (Li, Na, K, Rb, Ce), Group 2a (Be, Mg, Ca, Sr, Ba), Group 3b (B, Al), Group 5b (P), and Group 7b (F, Cl) in the long-form periodic table.

Preferably, the element as a dopant impurity is introduced in a state of a salt of the element and an acid radical into the porous region containing silica. Preferably, the acid radical of the salt is one selected from a group consisting of halogen elements, nitrate radical, sulfate radical, phosphate radical, carbonate radical, and oxalate radical. Furthermore, preferably, the salt is introduced in a dissolved state in a liquid into the porous region containing silica.

Preferably, the element as a dopant impurity is introduced in a compound state of a metallo-organic compound of the element into the porous region containing silica. In this case, the organo-metallic compounds of boron (B) and phosphorus (P) can be particularly effectively used. It is also possible to use the organo-metallic compounds of alkali metals and alkaline earth metals.

The silicon substrate forming method, as described above, preferably has a step of effecting the temperature decrease according to the predetermined program after the oxidation and densification of the porous silicon. This is effective for prevention of occurrence of defects such as cracks, fissures, or peeling in glass, as compared with a quenching case from the heat treatment temperature.

### Brief Description of the Drawings

Fig. 1A and Fig. 1B are (A) a perspective sectional view of a configuration of the present invention after oxidation and densification of PS selectively formed in a silicon substrate, and (B) a perspective sectional view of a conventional configuration.

Fig. 2 is a graph showing temperature dependence of linear expansion coefficients of silicon crystal and fused silica glass.

Fig. 3 is a graph showing relaxation of strain due to cumulative linear expansion difference with decrease of Tg of glass buried in silicon and with decrease of Δα based on increase of expansion coefficient of glass.

Fig. 4 is a graph showing an average linear expansion coefficient of glass to zero the strain due to cumulative linear expansion difference between silicon and buried glass.

Fig. 5 is a graph showing the relationship of alkali composition in silica with glass transition temperature Tg and heat shrinkage temperature Ts.

Fig. 6 is a graph showing the relationship between temperature and viscosity of glass with change in alkali composition in silica.

Fig. 7 is a graph showing the relationship between various impurity concentrations in silica and viscosity at 1200°C.

Fig. 8 is a graph showing the relationship between alkali composition in silica and linear expansion coefficient.

Fig. 9 is a graph showing the relationship between alkali composition in silica and refractive index.

Figs. 10A to 10E are step diagrams showing a method of forming a silicon substrate.

Figs. 11A and 11B are illustrations showing (A) a state in which a PS-region is selectively formed and (B) a state in which a PS region is changed into silica glass, in a comparative example.

Fig. 12 is a graph showing dependence of glass width on opening width of mask.

### Best Mode for Carrying out the Invention

Embodiments of the present invention will be described below with reference to the accompanying drawings.

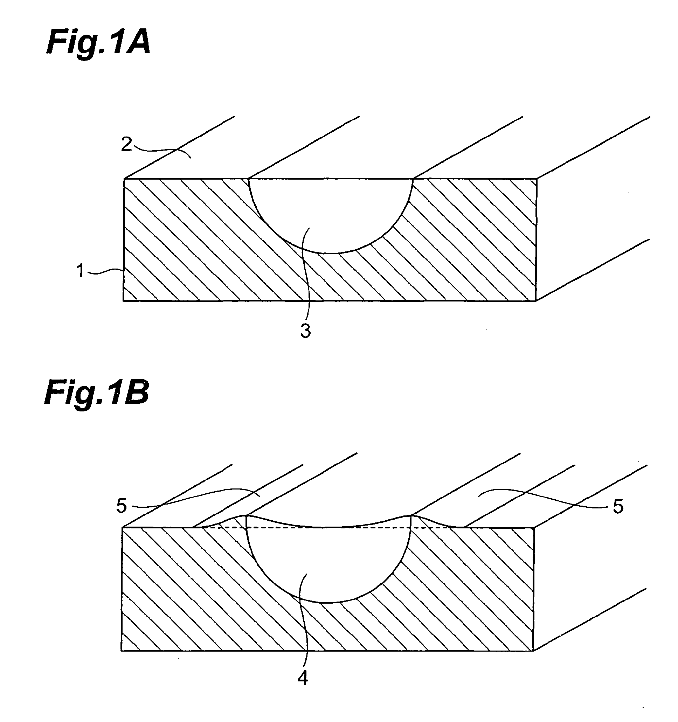

Figs. 1A and 1B are perspective sectional views showing a silicon substrate with a vitreous material 3 formed so as to fill a depression in a principal surface 2 of silicon substrate 1. Fig. 1A is a perspective sectional view of the silicon substrate where the stress acting between glass and silicon substrate is reduced by such adjustment that the glass transition temperature (Tg) of glass 3 is decreased by doping silica glass with an impurity and that the expansion coefficient of glass is made greater than that of silica glass so as to near that of the silicon substrate, based on the present invention.

Fig. 1B shows a perspective sectional view before implementation of the present invention. In Fig. 1B, reference numeral 4 denotes silica glass filled in a depression in the aforementioned principal surface. Numeral 5 denotes projections·bumps produced by strain caused by high Tg of silica glass and large expansion coefficient difference between silicon and silica glass, as detailed later.

The silicon substrate 1 according to the present invention, as shown in Fig. 1A, is one in which a depression of a silicon crystal is formed on at least one principal surface 2 side of a crystalline silicon substrate, which has a vitreous region 3 filled in the depression and consisting primarily of silicon oxide, and in which the glass transition temperature Tg of the vitreous region 3 is lower than that of pure silica glass. This configuration realizes the silicon substrate in which the internal stress is reduced between glass and silicon crystal, and a forming method thereof.

In particular, as described below, it is preferable to dope the silica glass formed by oxidation of porous silicon, with an impurity, and thereby to adopt the following means: the first means is to decrease the glass transition temperature Tg to below that of the silica glass; the second means is to increase the expansion coefficient of glass (αglass) by inclusion of the impurity and to decrease the expansion coefficient difference (Δα = αSi - αglass) between the silicon crystal and the glass; the third means is to decrease the internal stress induced between the silicon crystal and the glass, by synergistic effect of those; whereby it becomes feasible to provide the silicon substrate in which the internal strain is reduced between the glass and the silicon crystal, and to establish the forming method thereof.

Here the glass transition temperature Tg of the vitreous region 3 is set to below the glass transition temperature of pure silica glass as described above and the glass transition temperature Tg is particularly preferably not more than 900°C. In addition, the expansion coefficient α of the vitreous region 3 is preferably greater than the thermal expansion coefficient of pure silica glass. The expansion coefficient α of the vitreous region 3 is preferably not more than twice the expansion coefficient of the silicon crystal.

A specific configuration of the silicon substrate 1 is preferably one wherein the vitreous region 3 contains at least one or more elements out of elements in a group consisting of Group 1a (Li, Na, K, Rb, Ce), Group 2a (Be, Mg, Ca, Sr, Ba), Group 3b (B, Al), Group 5b (P), and Group 7b (F, Cl) in the long-form periodic table. This makes it feasible to suitably form the vitreous region 3 with the aforementioned characteristics.

As in the configuration example shown in Fig. 1A, the depression of the silicon crystal where the vitreous region 3 is provided is preferably formed long in a first direction of the principal surface 2 and relatively short in a second direction. This configuration is effective for application of the vitreous region 3 to an optical waveguide or the like. In this case, the vitreous region 3 preferably has a sectional area of not less than 1 µm x 1 µm, in a cross section including the second direction and being perpendicular to the principal surface 2.

The configuration, characteristics, and others of the silicon substrate 1 with the vitreous region 3 described above will be described below in detail with related data and others.

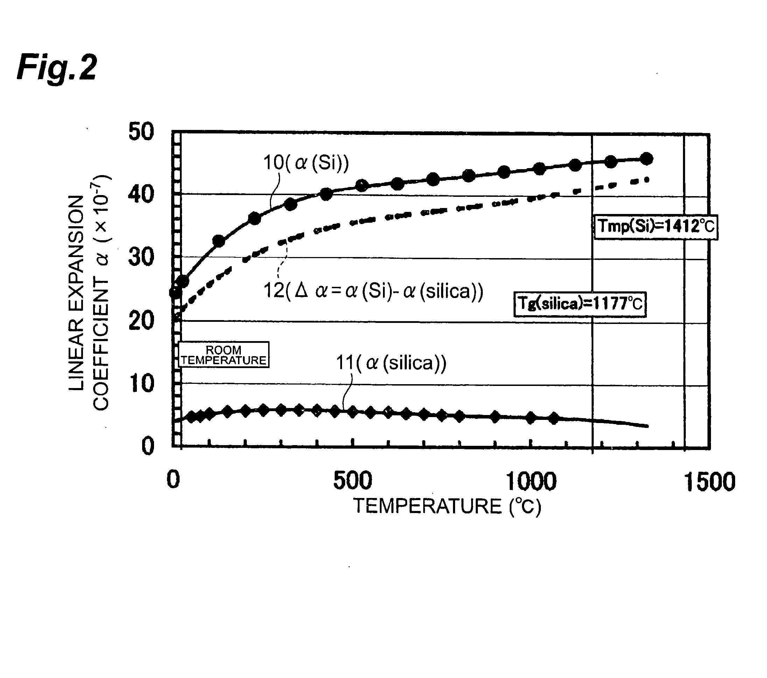

Fig. 2 is a graph showing the temperature dependence of expansion coefficient. In this graph, curve 10 indicates the expansion coefficient of silicon α (Si), and curve 11 the expansion coefficient of silica glass α (silica). Curve 12 indicates the difference Δα between the expansion coefficients of them. The graph of Fig. 2 also includes the glass transition temperature of silica glass Tg (silica) = 1177°C and the melting temperature of silicon Tm.p. = 1412°C. Curve 12 shows that the difference between the expansion coefficients is very large throughout the illustrated entire temperature region.

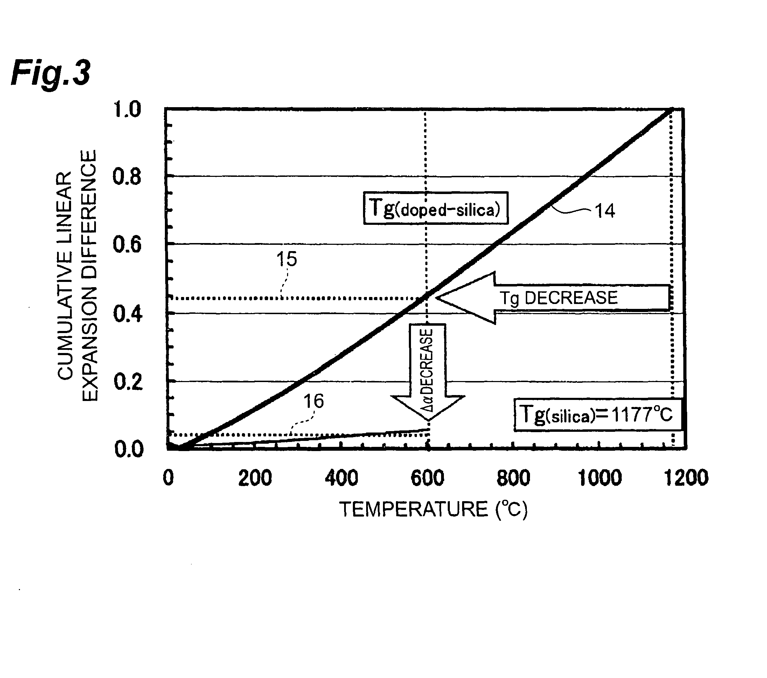

Fig. 3 is a graph showing the relaxation of strain due to cumulative linear expansion difference with decrease of Tg of glass buried in silicon and with decrease of Δα based on increase of the expansion coefficient of glass. In this graph, curve 14 is one obtained by integrating the curve 12 of expansion coefficient difference Δα shown in Fig. 2, from room temperature to Tg = 1177°C of silica glass to obtain the cumulative linear expansion coefficient difference, and normalizing it by value at the temperature of Tg.

Let us suppose a case wherein the addition of the impurity in the silica glass according to the present invention decreases Tg, for example, to 600°C. Even if the expansion coefficient of the impurity-doped glass is invariant, the cumulative linear expansion coefficient difference decreases to about 0.45 which is an intersection between straight line 15 and the vertical axis. Namely, it reduces to half as compared with the case without decrease of Tg. Furthermore, with consideration to the fact that the impurity addition increases the expansion coefficient of glass, i.e., it decreases Δα, this graph indicates that there is a possibility that the cumulative expansion coefficient difference decreases to about 0.1 indicated by an intersection between straight line 16 and the vertical axis, or that the cumulative expansion coefficient difference can be substantially zero.

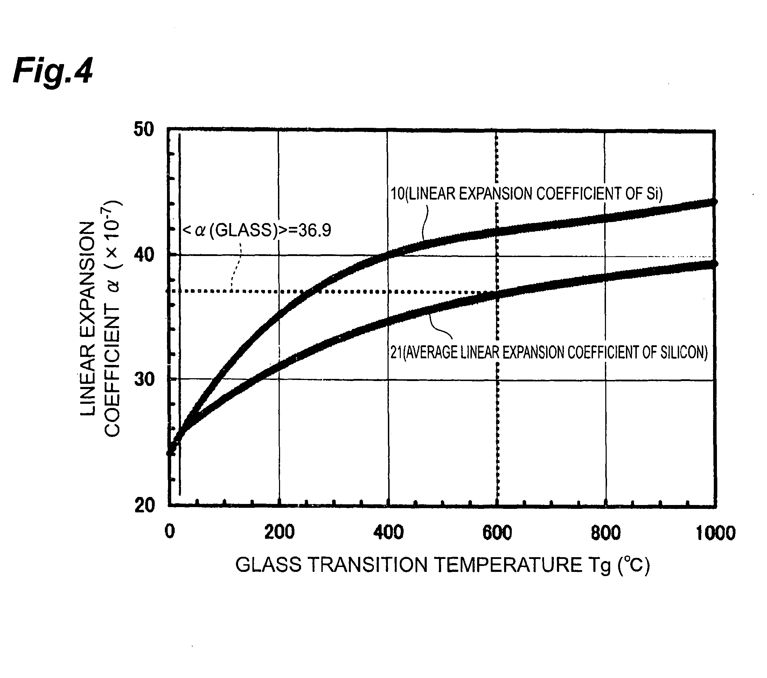

The graph of Fig. 4 shows a method of determining the expansion coefficient of glass to substantially zero the cumulative expansion difference from silicon in the temperature range from room temperature to Tg. The horizontal axis of the graph represents the glass transition temperature Tg of glass used. In this graph, curve 10 again indicates the temperature dependence of linear expansion coefficient of silicon. Curve 21 indicates an average linear expansion coefficient <α(Si)> of silicon between room temperature (20°C) and Tg.

For example, where Tg is assumed to be 600°C, the average linear expansion coefficient of silicon is <α(Si)> = 36.9 × 10⁻⁷. Therefore, in use of a glass with Tg = 600°C, it becomes feasible to substantially zero the cumulative expansion coefficient difference between silicon and glass, by such adjustment as to set the average linear expansion coefficient of the glass equal to the aforementioned value. It can be achieved by matching Tg of the glass and the average linear expansion coefficient of the glass determined as described above, with curve 21. Namely, this curve 21 also represents the average linear expansion coefficient of glass to substantially zero the cumulative expansion difference between silicon and glass in the temperature region from room temperature to Tg.

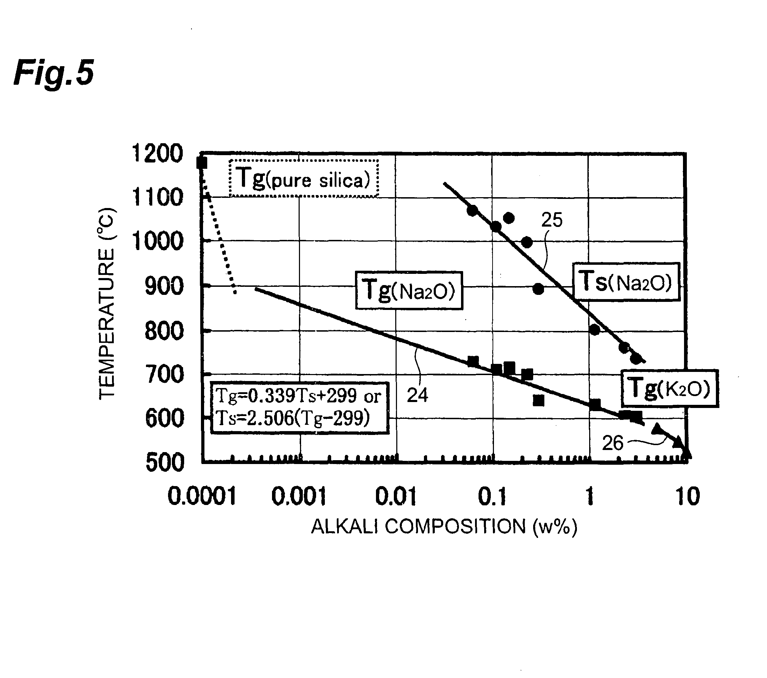

Fig. 5 is a graph showing the relationship of composition of alkali metal oxide with the glass transition temperature Tg where the silica glass is doped with an alkali metal oxide (Na₂O, K₂O), and with the temperature Ts of heat shrinkage and densification where porous silica is doped with Na₂O. This graph shows the result of large decrease in Ts and Tg, by doping with a small amount of an oxide of a Group 1a alkali metal element such as Na or K.

Namely, where the silica glass with Tg of 1177°C is doped with only 0.1% by weight of Na₂O, Tg of glass largely decreases to about 700°C. With 1% by weight, Tg of glass decreases to near 600°C. The same also applies to cases with K₂O. The graph of Fig. 5 exemplifies Na and K, but all the alkali metals such as Li, Na, K, Cs, and Rb have the same effect of largely decreasing Tg by doping in a small amount. Likewise, Tg can also be largely decreased by doping with alkaline earth metals.

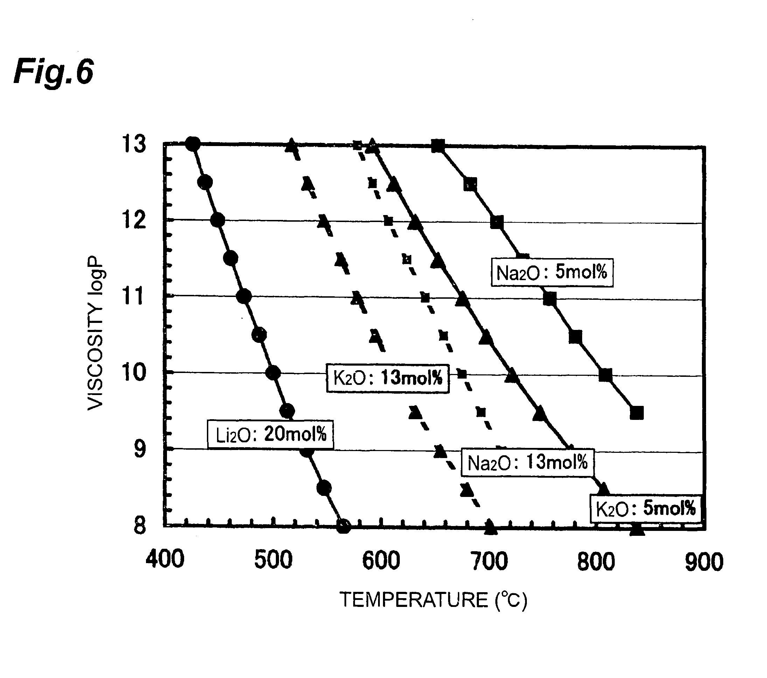

Fig. 6 is a graph showing the relationship between temperature and viscosity of glass where silica is doped with alkali metals in illustrated compositions. The graph shows that doping in the content of not less than 5 mol% largely decreases the viscosity even at low temperatures. Incidentally, Tg is defined as a temperature at which the viscosity reaches 10¹³ poise.

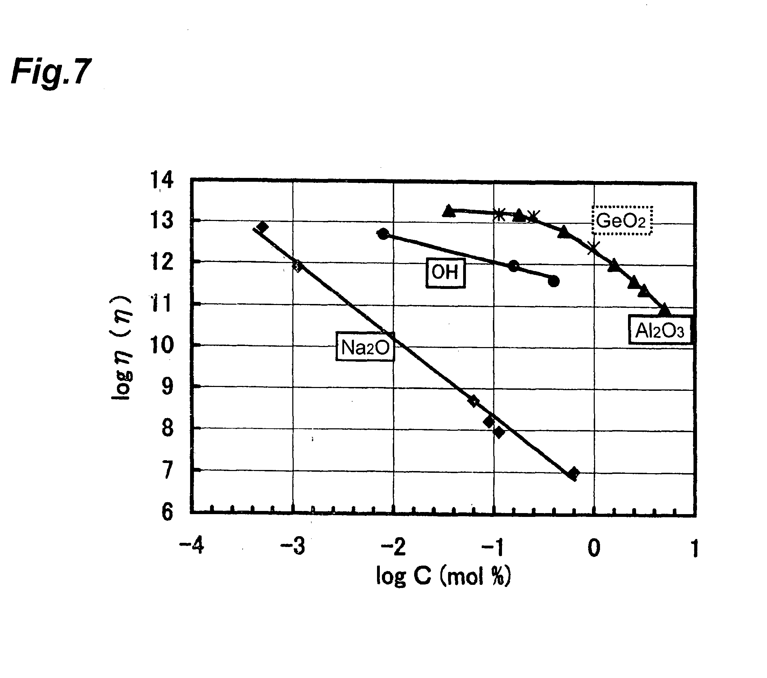

Fig. 7 is a graph showing the relationship between concentration and viscosity at a fixed temperature of 1200°C where silica is doped with each of Na₂O, OH, GeO₂, and Al₂O₃. In the case of doping with Na₂O, it is again shown that the viscosity is largely decreased even in very low concentrations.

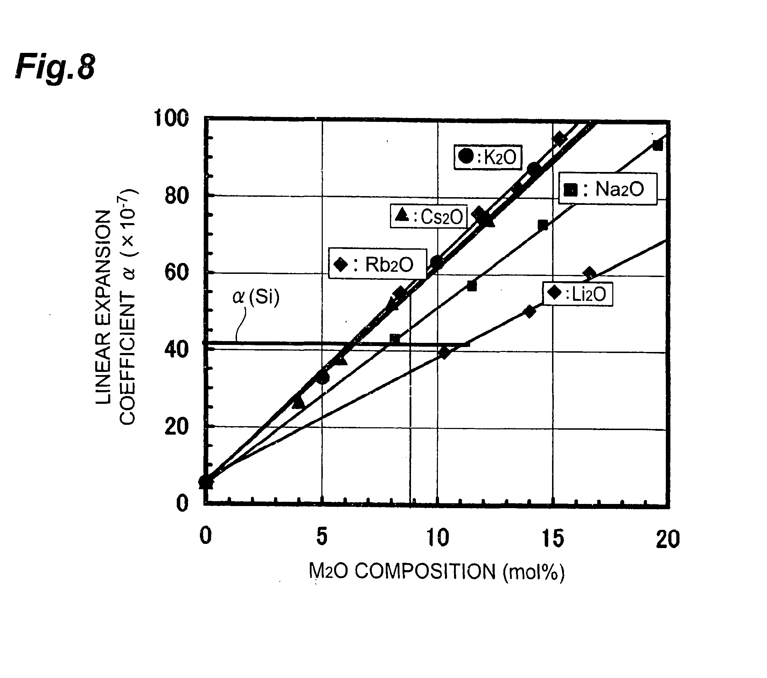

Fig. 8 is a graph showing the relationship between alkali composition (mol%) in silica and linear expansion coefficient. As apparent from this graph, the alkali composition and linear expansion coefficient demonstrate an almost linear relation, though the slope of linear expansion coefficient versus composition differs depending upon alkali metal species. Extrapolated points to the alkali composition of zero all agree with the expansion coefficient of silica of 5.5 × 10⁻⁷.

When consideration is made in comparison of this Fig. 8 with Figs. 4 and 5, it is seen that Tg decreases to about 600°C and the linear expansion coefficient becomes approximately equal to that of silicon at the alkali composition of about 5%, though there is a slight difference between Na₂O and K₂O. Such composition achieves the conditions that Tg of doped glass decreases and the expansion coefficient becomes approximately equal to that of silicon, and enables large decrease in stress between the glass filled in the depression of silicon and the substrate silicon, and in strain.

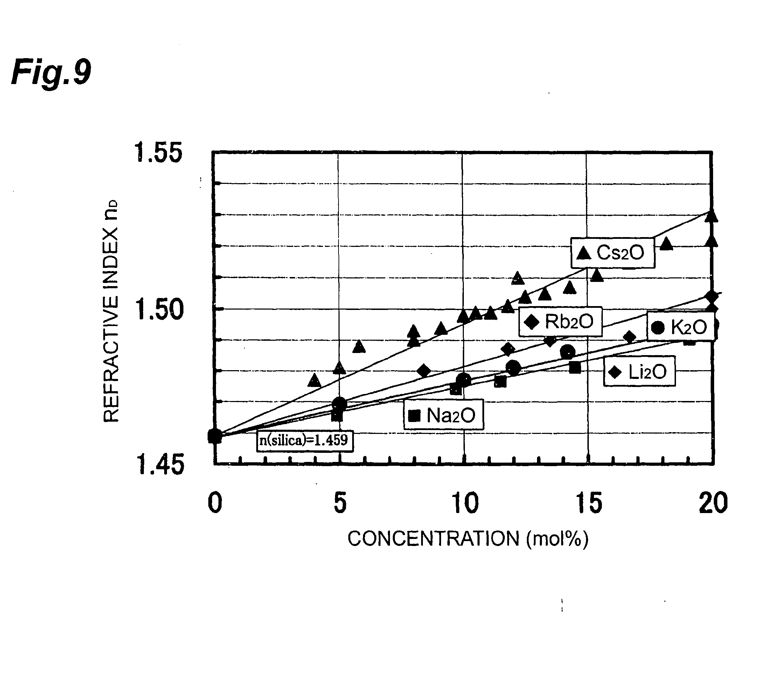

Fig. 9 is a graph showing the relationship between dopant alkaline concentration in silica and refractive index of glass. As seen from this graph, the refractive index also indicates linear relations proportional to the alkaline concentration. A glass doped with 5 mol% of K₂O indicates n = 1.469, and Δn is increased by 0.7% in comparison with silica.

Similarly, it is also known that the properties of silica glass largely vary by doping silica glass consisting primarily of SiO₂, with a relatively small amount of a Group 2a alkaline earth oxide or the like such as MgO, CaO, SrO, or BaO being an NWM material. Particularly, it is known that the glass transition temperature Tg decreases and the thermal expansion coefficient α increases. The addition of these Group 2a alkaline earth oxides and the like is also useful to the present invention.

Furthermore, as described previously about the conventional technologies, the multicomponent borophosphate silicate glass obtained by adding boric acid (B₂O₃) and phosphoric acid (P₂O₅) in silica glass is normally melted at a lower temperature and has a larger thermal expansion coefficient than silica glass. Therefore, it is easy to match the expansion coefficients between glass and silicon, and it is feasible to achieve the low-strain or strain-free structure of the present invention. The melting temperature is more decreased by further doping the borophosphate silicate glass with fluorine. These multicomponent glasses are also useful for the present invention.

The doping with boron (B) or phosphorus (P) can be implemented by the conventional methods using halides, and also by using organic compounds of these metals. The known organic compounds of boron are, for example, compounds as represented by general formula B(OCₙH₂ₙ₊₁)₃ or the like. The known organic compounds of phosphorus are, for example, those as represented by general formula PO(OCₙH₂ₙ₊₁)₃ or the like. All of these are liquid at ordinary temperature and have a relatively high vapor pressure. Therefore, for example, while holding the silicon substrate with the porous material containing silica, in vacuum, a vapor of these metallo-organic compounds can be introduced into the porous material.

### (Examples)

Described below in detail with examples are cases of applying the Group 1a alkali metal oxides such as Li₂O, Na₂O, K₂O, Rb₂O, and Cs₂O and the Group 2a alkaline earth oxides or the like such as MgO, CaO, SrO, and BaO being the network modifiers (NWM), to the present invention.

These alkali metals or alkaline earth metals react with various acids to form salts. Typical examples of the acids herein include hydrides of the halogen family of elements such as fluorine, chlorine, bromine, and iodine, nitric acid, sulfuric acid, phosphoric acid, boric acid, carbonic acid, oxalic acid, and so on. It is known that the salts of the above metals and the acids are dissolved in various solvents. Described below in particular are cases where the solvent is water. All of these salts are well dissolved in water. Particularly, an aqueous solution of nitrate or sulfate does not dissolve porous silicon (PS) or porous silica, and, therefore, they are particularly preferred salts in implementation of the present invention.

Step sectional diagrams of a method of forming a silicon substrate according to the present example are shown in Figs. 10A to 10E. First, a mask layer 50 is formed on a principal surface of silicon substrate 1. Then the mask layer 50 is removed in part by photoetching to form an opening 51 of the mask layer in the width w long in the direction normal to the plane of the drawing (Fig. 10A).

Next, this silicon substrate 1 is anodized in a hydrofluoric acid solution to form a porous silicon (PS) region 52 (Fig. 10B). On this occasion, concerning the porosity of PS, preferably, this PS is doped with a desired amount of one of the aforementioned alkali metals and alkaline earth metals, and the porosity is preliminarily adjusted so that the volume of glass after oxidation and densification can occupy the PS region without excess or deficiency.

In the formation of the porous silicon region 52, the porous silicon region may be selectively formed in the crystalline silicon substrate through the mask layer in an atmosphere containing hydrofluoric acid. The mask layer is preferably formed using at least one of amorphous silicon nitride, amorphous silicon carbide, amorphous carbon, and n-type silicon.

Next, a pre-oxidation step is carried out to partially or completely oxidize a silicon fine column inside the porous silicon region to convert it into a porous region containing silica. Specifically, the aforementioned PS is oxidized at a temperature of not less than 300°C nor more than 900°C to form a region 53 wherein silicon of the PS part is properly oxidized (Fig. 10C).

Here 300°C is a temperature at which a monolayer of SiO₂ is formed on the surface of the silicon fine column inside PS, and 900°C a temperature at which the silicon fine column inside the PS region is almost completely oxidized to convert PS into porous silica. In this manner, the degree of oxidation of the PS part can be adjusted by the temperature of the pre-oxidation step.

Next, the porous region containing silica is doped with an impurity element. Specifically, the silicon substrate is immersed for a predetermined time in an aqueous solution in which sodium nitrate NaNO₃ being one of the aforementioned salts is dissolved in a predetermined concentration. Then dissolved metal ions are made to penetrate into pores of the porous region containing silica, thereby forming a porous region 54 impregnated with the metal ions (Fig. 10D).

In general, the foregoing impurity element is preferably at least one or more elements selected from the elements in the group consisting of Group 1a (Li, Na, K, Rb, Ce), Group 2a (Be, Mg, Ca, Sr, Ba), Group 3b (B, Al), Group 5b (P), and Group 7b (F, Cl) in the long-form periodic table.

Preferably, the element as a dopant impurity is introduced in a state of a salt of the element and an acid radical into the porous region containing silica. In this case, the acid radical of the salt is preferably one selected from the group consisting of halogen elements, nitrate radical, sulfate radical, phosphate radical, carbonate radical, and oxalate radical, and the salt is particularly preferably introduced in a state in which it is dissolved in a liquid, into the porous region containing silica.

In another preferred example, the element as a dopant impurity is introduced in a compound state in the form of a metallo-organic compound of the element into the porous region containing silica.

Next, this silicon substrate is subjected to a thermal treatment, for example, at 900°C. At this time, as shown in Fig. 5, the silica glass containing 1.0% by weight of Na₂O undergoes heat shrinkage and densification at this temperature. Thereafter, the temperature is decreased in accordance with a predetermined program, and the substrate is maintained at the glass transition temperature Tg for a predetermined time. Thereafter, the temperature is further decreased and the substrate is taken out. A sectional shape after the heat treatment is shown in Fig. 10E. The bumps at the boundary between the impurity-doped glass 55 and the silicon substrate are largely decreased as compared with Fig. 1B, so that the surface becomes almost flat.

In the above example, the effect of decrease of the glass transition temperature Tg shown in Fig. 5 is prominent, but at Na₂O concentrations of about 1 mol%, as seen from Fig. 8, the effect of increase of the thermal expansion coefficient is not always prominent. However, the Tg decrease effect and Δα increase effect shown in Fig. 3, both effectively act. As a result, the bumps 5 shown in Fig. 1B largely decrease on the surface of the substrate after the process of the present example. This decrease of the bumps 5 results from the large decrease in the stress locally acting in the vicinity of the interface between glass 4 and silicon substrate 1.

The above example adopted the low concentration of about 1% as a doping amount of the impurity in silica. At this concentration, the effect of the impurity addition on the expansion coefficient is not prominent as shown in Fig. 8. However, the concentration of the corresponding impurity may be adjusted in order to implement doping with the impurity to the level of the average linear expansion coefficient α (Si) of silicon as shown in Fig. 8. When the linear expansion coefficient of glass is approximately equal to or smaller than aforementioned α (Si), the glass is subjected to compressive stress from silicon and the glass is less likely to suffer defects such as cracks, fissures, or peeling; therefore, it is a particularly desired condition. However, a condition adaptable to the object of the present invention is that the average linear expansion coefficient of glass is within twice the aforementioned α (Si).

The conventional technologies by the Inventors (the aforementioned Japanese Patent Application Laid-Open No. H10-133047, No. H11-14848, No. H11-242125, and No. 2000-47045) describe 850°C-900°C as temperatures for oxidation of the porous silicon (PS) into the porous silica glass. They also describe 950°C-1150°C as temperatures for densification of this porous silica glass. However, they describe nothing about the glass transition temperature Tg of silica glass. The present invention allows use of silica glass with Tg being the temperature of not more than 900°C, as shown in Fig. 5.

### (Comparative Example)

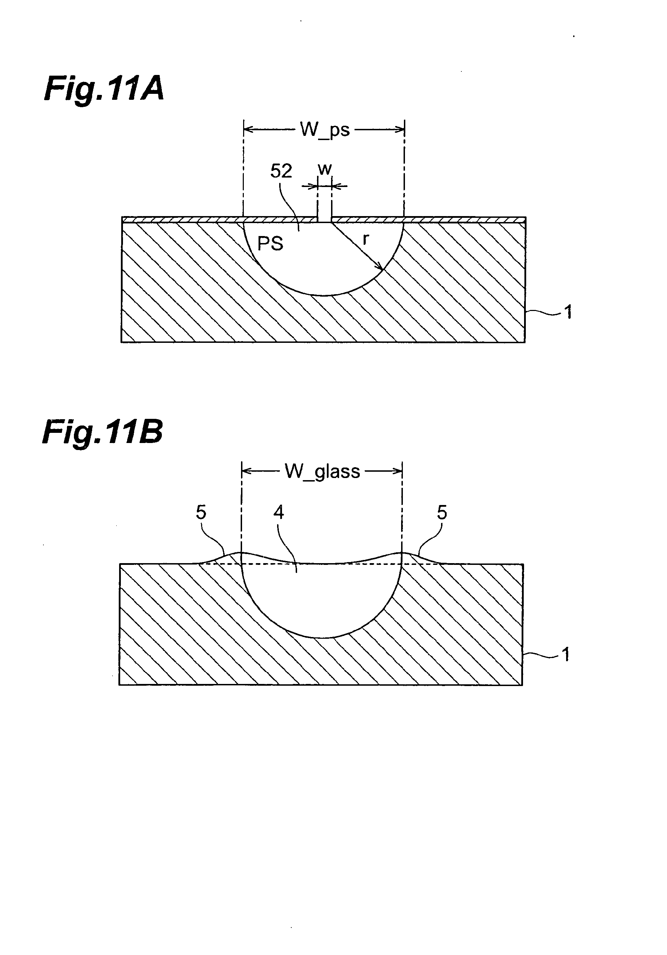

The situation before implementation of the present invention is shown as a comparative example in Figs. 11A and 11B. Fig. 11A shows a state in which porous silicon (PS) region 52 is selectively formed inside Si substrate 1. This corresponds to the state of Fig. 10B. The relationship between the width of the PS region W_ps along the surface of the silicon substrate and the opening width w of the mask is represented by a simple and easy linear equation of W_ps = 2r + w. In the present example, r was 20 µm. Furthermore, anodization was performed by preliminarily adjusting the hydrofluoric acid concentration and current density to achieve such porosity of PS that the silica glass after oxidation and densification of PS occupies the volume having been occupied by the PS region, without excess or deficiency.

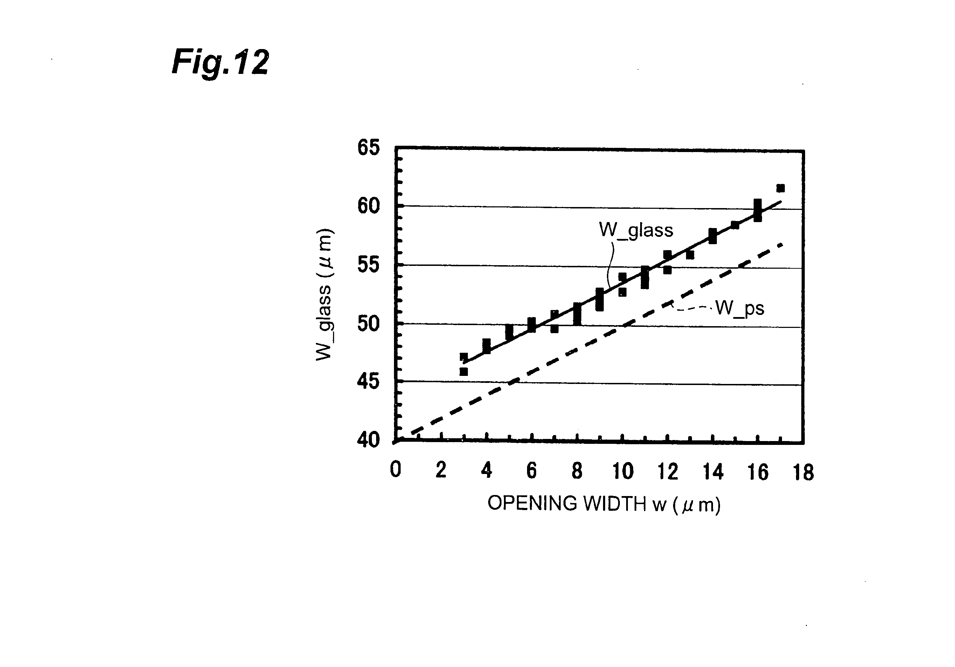

After pre-oxidation of this substrate, it was oxidized and densified at 1200°C in a wet oxygen flow to convert the PS part 52 into silica glass 4. A sectional view of this state is schematically depicted in Fig. 11B. As described previously, in spite of the adjustment of the porosity of PS part, bumps 5 were observed in the vicinity of the interface between the silica glass and the silicon substrate. Observation was also conducted to observe the dependence of the width W_glass of the silica glass region in Fig. 11B on the mask opening width w. As shown in the graph of Fig. 12, the simple linear relation of W_glass = 2r' + w was recognized. On the other hand, W_ps after production of the PS region is indicated by a dashed line in Fig. 12. A clear difference is recognized between W_ps and W_glass, and W_glass is always larger than W_ps.

The reason for it is that the glass transition temperature Tg of silica glass is as high as 1177°C and the volume variation difference occurs due to the large thermal expansion coefficient difference between silicon and silica glass in a process of cooling the silicon substrate in the thermal equilibrium at the oxidation·densification temperature to room temperature. During the temperature decrease after the thermal treatment, silicon shrinks large, whereas silica glass shrinks little. This is the reason why the difference between W_glass and W_ps is large, i.e., W_glass is always larger than W_ps. Namely, as shown in Fig. 2, large Δα is responsible for the bumps 5 and for the aforementioned difference in the dependence on the opening width w between W_glass and W_ps.

When compared with the above example, the present invention involves doping the glass consisting primarily of silica with an impurity, to decrease the glass transition temperature Tg of the glass and to increase the thermal expansion coefficient of the glass so as to decrease the thermal expansion coefficient difference as well. This relation being the fundamental concept of the present invention is shown in Fig. 3.

### Industrial Applicability

In the silicon substrate according to the present invention, as described above, the glass formed in the depression of the silicon substrate and consisting primarily of silica is appropriately doped with an oxide of a metal element serving as a network modifier (NWM) or a network former (NWF), to decrease the glass transition temperature Tg' of the glass and to increase the expansion coefficient of the glass so as to be greater than that of silica glass, whereby it becomes feasible to decrease the stress in the vicinity of the interface between the silicon substrate and the glass.

The forming method of the silicon substrate according to the present invention involves the new production process of doping the porous material formed in the depression of the silicon substrate and containing silica, with a metal element to serve as a network modifier (NWM) or a network former (NWF) in the form of a salt, a metallo-organic compound, or the like, thereby providing the method of producing the glass consisting primarily of silica and doped with a low concentration (not more than several %) of NWF, hard to achieve before, in a highly reproducible fashion. The present invention also provides the production method of the glass doped with a required amount of NWF. Use of a salt of a metal element is a simple method of dissolving it in a solvent such as water, and use of organometallic compounds is also a simple method using a vapor pressure of those compounds, each of which implements doping of the porous material containing silica.

As described above, first, the Tg decrease achieves the decrease in the cumulative linear expansion difference between silica and silicon. Second, the increase in the expansion coefficient of silica achieves decrease in Δα between silica and silicon. Third, the synergistic effect of them achieves decrease in the internal strain. Fourth, the surface of the substrate becomes flat as shown in Fig. 1A, to decrease the unwanted bumps 5. Fifth, the curvature of the entire substrate is further reduced. Sixth, the internal strain reducing effect of the complex material system of the silicon substrate and the glass buried in the depression prevents occurrence of inconveniences due to the internal strain in various devices using the complex material system, and further raises expectations for improvement in reliability. For example, where the buried glass is used as an optical waveguide, stress will degrade polarization conservation of light propagating in the waveguide, but the present invention reduces this stress, so as to prevent the degradation of polarization conservation.

## Claims

1. A silicon substrate wherein a depression of a silicon crystal is formed on at least one principal surface side of a crystalline silicon substrate, the silicon substrate having a vitreous region filled in the depression and comprising silicon oxide as a principal component, wherein a glass transition temperature Tg of the vitreous region is lower than a glass transition temperature of pure silica glass and not more than 900°C.

2. The silicon substrate according to Claim 1, wherein an expansion coefficient α of the vitreous region is greater than a thermal expansion coefficient of pure silica glass.

3. The silicon substrate according to Claim 1 or 2, wherein an expansion coefficient α of the vitreous region is not more than twice an expansion coefficient of the silicon crystal.

4. The silicon substrate according to any one of Claims 1 to 3, wherein the vitreous region contains at least one or more out of elements in a group consisting of Group 1a (Li, Na, K, Rb, Ce), Group 2a (Be, Mg, Ca, Sr, Ba), Group 3b (B, Al), Group 5b (P), and Group 7b (F, Cl) in the long-form periodic table.

5. The silicon substrate according to any one of Claims 1 to 4, wherein the depression of the silicon crystal is formed long in a first direction of the principal surface and relatively short in a second direction, and wherein the vitreous region has a sectional area of not less than 1 µm × 1 µm in a cross section including the second direction and being perpendicular to the principal surface.

6. A method of forming a silicon substrate, comprising:
a step of forming a mask layer on a front face of at least one principal surface of a crystalline silicon substrate;
a step of removing a part of the mask layer;
a step of selectively forming a porous silicon region in the crystalline silicon substrate by anodization in a hydrofluoric acid solution, or through the mask layer in an atmosphere containing hydrofluoric acid;
a step of partially or completely oxidizing a silicon fine column inside the porous silicon region to change into a porous region containing silica;
a step of doping the porous region containing silica, with an impurity element;
a step of oxidizing and densifying the porous region containing silica; and
a step of effecting a temperature decrease according to a predetermined program.

7. The method according to Claim 6, wherein the mask layer is formed using at least one out of amorphous silicon nitride, amorphous silicon carbide, amorphous carbon, and n-type silicon.

8. The method according to Claim 6 or 7, wherein the impurity element is at least one or more out of elements in a group consisting of Group 1a (Li, Na, K, Rb, Ce), Group 2a (Be, Mg, Ca, Sr, Ba), Group 3b (B, Al), Group 5b (P), and Group 7b (F, Cl) in the long-form periodic table.

9. The method according to any one of Claims 6 to 8, wherein the element as a dopant impurity is introduced in a state of a salt of the element and an acid radical into the porous region containing silica.

10. The method according to Claim 9, wherein the acid radical of the salt is one selected from a group consisting of halogen elements, nitrate radical, sulfate radical, phosphate radical, carbonate radical, and oxalate radical.

11. The method according to Claim 10, wherein the salt is introduced in a dissolved state in a liquid into the porous region containing silica.

12. The method according to any one of Claims 6 to 8, wherein the element as a dopant impurity is introduced in a compound state of a metallo-organic compound of the element into the porous region containing silica.
